# EUROPEAN PATENT APPLICATION

(11) **EP 1 978 735 A2**
(43) Date of publication of application: **08.10.2008**
(21) Application number: 08005909.0
(22) Date of filing: 27.03.2008
(51) Int. Cl.: H04N 5/50

(54) **Television broadcast receiving apparatus**

(30) Priority: 02.04.2007 JP 2007096526
(71) Applicant: ALPS ELECTRIC CO., LTD., Tokyo 145-8501 (JP)
(72) Inventor: Furuta, Toshirou, Ota-ku Tokyo, 145-8501 (JP); Iimure, Satoshi, Ota-ku Tokyo, 145-8501 (JP)
(74) Representative: Klunker . Schmitt-Nilson . Hirsch

(57) **Abstract**

A master tuner (10) and a slave tuner (20) are mounted on a wiring board (1) so as to stand substantially in parallel to each other in which side faces (11b, 21b) thereof face each other. Input connectors (26, 27) protruding from the side face (21 b) are inserted in and connected to output connectors (18, 19) protruding from the side face (11b). Television broadcasting (terrestrial and satellite) high-frequency signals input from an antenna or the like to the input connectors (16, 17) of the master tuner (10) are distributed by signal distributing sections (14, 15) included in the master tuner (10) to two groups of outputs. One group of outputs includes tuner sections (12, 13) of the master tuner (10), and the other group of outputs includes tuner sections (22, 23) of the slave tuner (20) via the connectors (18, 19, 26, 27).

## Description

### BACKGROUND OF THE INVENTION

### 1. Field of the Invention

The present invention relates to television broadcast receiving apparatuses including two tuners arranged in parallel to each other on a wiring board, thereby enabling distribution of television broadcast high-frequency signals to the tuners and viewing and/or recording of two broadcast programs during the same period of time.

### 2. Description of the Related Art

When two tuners are provided in parallel to each other on a wiring board and high-frequency signals selected by the tuners are output to respective decoders or the like in the tuners, two broadcast programs can be viewed and/or recorded during the same period of time, which is convenient (for example, see Japanese Unexamined Patent Application Publication No. 2006-60474, page 10, Fig. 13).

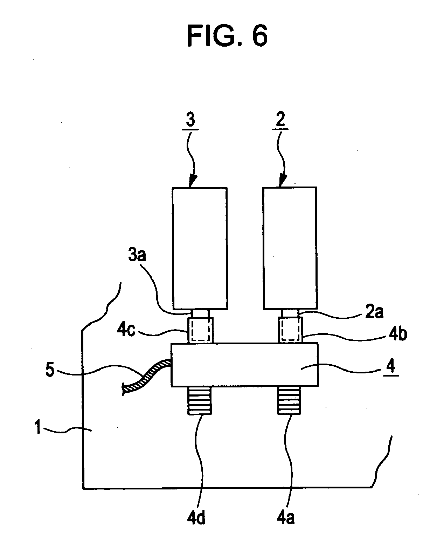

Fig. 6 is a plan view of a broadcast receiving apparatus of the related art including two television broadcast tuners arranged in parallel to each other. As shown in Fig. 6, a tuner 2 and a tuner 3 are mounted on a wiring board 1 at a predetermined space therebetween so as to face each other and to stand substantially in parallel to each other. That is, terminal groups (not shown) protruding from the bottom faces of the tuners 2 and 3 are soldered and connected to a wiring pattern (not shown) on the wiring board 1. An input connector 2a is provided on one end face in the longitudinal direction of the tuner 2, and an input connector 3a is provided on one end face in the longitudinal direction of the tuner 3. The input connectors 2a and 3a protrude from the end faces of the tuners 2 and 3, respectively. The input connectors 2a and 3a are inserted in and connected to output connectors 4b and 4c, respectively, which are provided on one face of a distributor 4 and which protrude from the face of the distributor 4. On a face of the distributor 4 opposite to this face, an input connector 4a into which television broadcast high-frequency signals are input from an antenna or the like and an output connector 4d connected to an external device are provided protruding therefrom. The distributor 4 amplifies television broadcast high-frequency signals input to the input connector 4a and distributes the amplified signals to the output connectors 4b, 4c, and 4d. A cable 5 for feeding power to the distributor 4 is connected to a connector or the like (not shown) on the wiring board 1.

In the television broadcast receiving apparatus of the related art shown in Fig. 6, connector connections are established by inserting the input connectors 2a and 3a of the two tuners 2 and 3 into the output connectors 4b and 4c of the distributor 4. It is thus necessary to secure a space for connecting the tuners 2 and 3 to the distributor 4 via the connectors 2a, 3a, 4b, and 4c, resulting in an increase in the longitudinal dimension of the overall apparatus. Therefore, it is difficult to reduce the size of the overall apparatus. Since the cable 5 for feeding power to the distributor 4 is routed in space, the apparatus is easily affected by noise. Since the cable 5 must be routed by hand, an assembling process on the wiring board 1 involves a greater number of steps. Since each of the tuners 2 and 3 generally has a terrestrial tuner section and a satellite tuner section, it is also necessary to have a terrestrial distributor 4 and a satellite distributor 4. In that case, two cables 5 for feeding power to the two distributors 4 are necessary.

### SUMMARY OF THE INVENTION

The present invention provides a television broadcast receiving apparatus that is advantageous in terms of size reduction and fewer assembling steps and that is not easily affected by noise.

According to an aspect of the present invention, there is provided a television broadcast receiving apparatus including a first tuner having a first metal casing having a rectangular parallelepiped shape, a first input connector serving as a high-frequency input terminal and protruding outward from one end face in the longitudinal direction of the first metal casing, a signal distributing section configured to distribute a high-frequency signal supplied from the first input connector to outputs, a first tuner section being one output, and an output connector being the other output, serving as a high-frequency output terminal, and protruding outward from one side face extending along the longitudinal direction of the first metal casing, the signal distributing section and the first tuner section being stored in an internal space enclosed by the first metal casing; a second tuner having a second metal casing having a rectangular parallelepiped shape, a second input connector protruding outward from one side face extending along the longitudinal direction of the second metal casing and being inserted in and connected to the output connector, and a second tuner section to which the high-frequency signal is supplied via the second input connector, the second tuner section being stored in an internal space enclosed by the second metal casing; and a wiring board. The first tuner and the second tuner are mounted on the wiring board so as to stand substantially in parallel to each other in which the one side face of the first tuner and the one side face of the second tuner face each other.

In the television broadcast receiving apparatus with the foregoing structure, the first tuner includes the signal distributing section. The high-frequency signal is distributed by the signal distributing section to outputs. One output is the tuner section (first tuner section) of the first tuner, and the other output is the tuner section (second tuner section) of the second tuner via the output connector and the second input connector. Thus, compared with a structure in which a single distributor is connected via connectors to two tuners, the longitudinal dimension of the overall apparatus can be reduced, and the size of the overall apparatus can be easily reduced. Furthermore, the number of components of the apparatus can be reduced. Since a cable for feeding power to the single distributor becomes unnecessary, the number of assembling steps on the wiring board can be reduced, and the television broadcast receiving apparatus thus becomes difficult to be affected by noise.

Each of the first tuner section, the signal distributing section, the first input connector, the output connector, the second tuner section, and the second input connector preferably includes two of the same for terrestrial and satellite broadcasting.

The second tuner may further include a second signal distributing section configured to distribute the high-frequency signal supplied from the second input connector to outputs, the second signal distributing section being stored in the internal space enclosed by the second metal casing, and a second output connector configured to output the high-frequency signal distributed by the second signal distributing section to an external device, the second output connector protruding outward from one end face in the longitudinal direction of the second metal casing, the second output connector being one output and the second tuner section being the other output. With this structure, high-frequency signals can be supplied to an external television receiver or the like without signal degradation from, for example, a video cassette recorder (VCR) including the first and second tuners. In this case, each of the first tuner section, the signal distributing section, the first input connector, the output connector, the second tuner section, the second signal distributing section, the second input connector, and the second output connector preferably includes two of the same for terrestrial and satellite broadcasting.

The signal distributing section in the first tuner preferably includes an amplifier. However, it is unnecessary for the second signal distributing section in the second tuner to include an amplifier.

### BRIEF DESCRIPTION OF THE DRAWINGS

Fig. 1 is a plan view of a television broadcast receiving apparatus according to a first embodiment of the present invention;
Fig. 2 is a perspective view of the unassembled television broadcast receiving apparatus according to the first embodiment;
Fig. 3 is a block diagram showing a distribution channel of a high-frequency signal input to the television broadcast receiving apparatus according to the first embodiment;
Fig. 4 is a plan view of a television broadcast receiving apparatus according to a second embodiment of the present invention;
Fig. 5 is a perspective view of the unassembled television broadcast receiving apparatus according to the second embodiment; and
Fig. 6 is a plan view of a television broadcast receiving apparatus of the related art.

### DESCRIPTION OF THE PREFERRED EMBODIMENTS

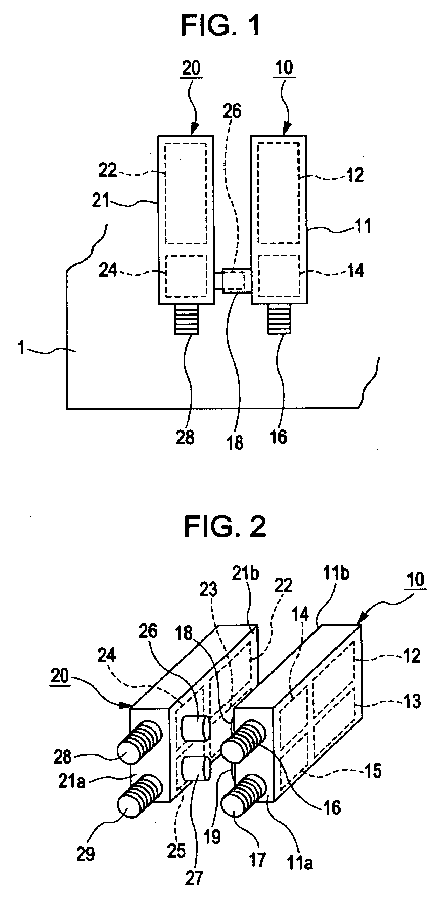

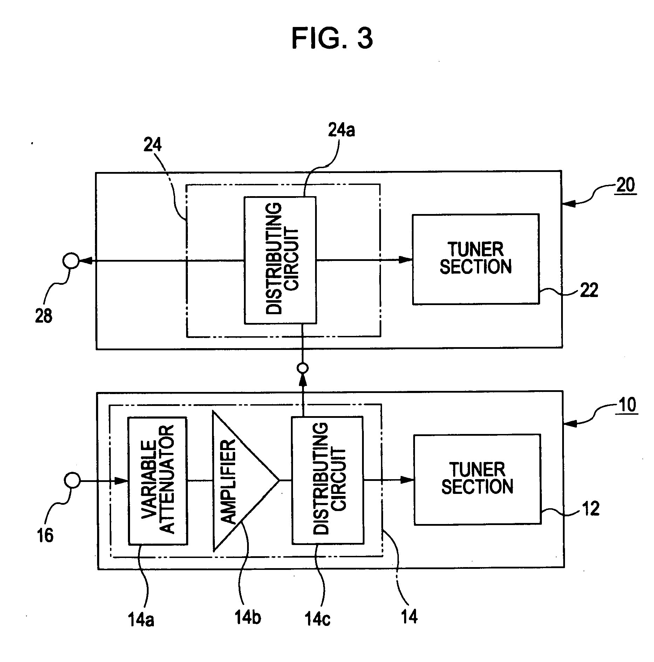

Embodiments of the present invention will now herein be described below with reference to the drawings. Fig. 1 is a plan view of a television broadcast receiving apparatus according to a first embodiment of the present invention. Fig. 2 is a perspective view of the television broadcast receiving apparatus. Fig. 3 is a block diagram showing a distribution channel of a high-frequency signal input to the television broadcast receiving apparatus.

The television broadcast receiving apparatus shown in Figs. 1 to 3 is a digital VCR including two tuners (a master tuner 10 and a slave tuner 20). Both the master tuner 10 and the slave tuner 20 can receive terrestrial and satellite broadcasting. The master tuner 10 and the slave tuner 20 are mounted on a wiring board (motherboard) 1 so as to stand substantially in parallel to each other. That is, terminal groups (not shown) protruding from the bottom faces of the master tuner 10 and the slave tuner 20 are soldered and connected to a wiring pattern (not shown) on the wiring board 1. Television broadcast high-frequency signals input from an antenna or the like to the master tuner 10 are distributed to tuner sections in the master tuner 10 and the slave tuner 20.

The master tuner 10 has a metal casing 11 having a rectangular parallelepiped shape. The metal casing 11 encloses an internal space in which tuner sections 12 and 13 and signal distributing sections 14 and 15 are stored. The signal distributing section 14 supplies a terrestrial high-frequency signal to the tuner section 12. The signal distributing section 15 supplies a satellite high-frequency signal to the tuner section 13. Terminal groups (not shown) protruding downward from the bottom face of the metal casing 11 extend from the tuner sections 12 and 13 and the signal distributing sections 14 and 15. On the master tuner 10, input connectors 16 and 17 into which television broadcast high-frequency signals are input from an antenna or the like and output connectors 18 and 19 for supplying the distributed high-frequency signals to the slave tuner 20 are provided protruding from the master tuner 10. The input connectors 16 and 17 protrude outward from one end face 11a in the longitudinal direction of the metal casing 11. The output connectors 18 and 19 protrude outward from one side face 11b extending along the longitudinal direction of the metal casing 11.

The input connector 16 and the output connector 18 are connected to the signal distributing section 14 for terrestrial television broadcasting. A terrestrial high-frequency signal supplied via the input connector 16 to the signal distributing section 14 is amplified and then distributed to the tuner section 12 and the output connector 18. The input connector 17 and the output connector 19 are connected to the signal distributing section 15 for satellite television broadcasting. A satellite high-frequency signal input via the input connector 17 to the signal distributing section 15 is amplified and then distributed to the tuner section 13 and the output connector 19.

That is, as shown in Fig. 3, the signal distributing section 14 for terrestrial broadcasting included in the master tuner 10 has a variable attenuator 14a, an amplifier 14b, and a distributing circuit 14c. A terrestrial high-frequency signal input to the input connector 16 is level-adjusted by the variable attenuator 14a, amplified by the amplifier 14b, and distributed by the distributing circuit 14c to two outputs. One output is the tuner section 12, and the other output is the output connector 18. The signal distributing section 15 for satellite broadcasting included in the master tuner 10 has a structure similar to that of the signal distributing section 14 for terrestrial broadcasting. A satellite high-frequency signal is distributed by a distributing circuit in the signal distributing section 15 to two outputs. One output is the tuner section 13, and the other output is the output connector 19.

The slave tuner 20 has a metal casing 21 having a rectangular parallelepiped shape. The metal casing 21 encloses an internal space in which tuner sections 22 and 23 and signal distributing sections 24 and 25 are stored. The signal distributing section 24 supplies a terrestrial high-frequency signal to the tuner section 22. The signal distributing section 25 supplies a satellite high-frequency signal to the tuner section 23. Terminal groups (not shown) protruding downward from the bottom face of the metal casing 21 extend from the tuner sections 22 and 23 and the signal distributing sections 24 and 25. On the slave tuner 20, input connectors 26 and 27 inserted in and connected to the output connectors 18 and 19 of the master tuner 10 and output connectors 28 and 29 connected to an external device, such as a television receiver or the like, are provided protruding from the slave tuner 20. The input connectors 26 and 27 protrude outward from one side face 21b extending along the longitudinal direction of the metal casing 21. The output connectors 28 and 29 protrude outward from one end face 21a in the longitudinal direction of the metal casing 21.

The input connector 26 and the output connector 28 are connected to the signal distributing section 24 for terrestrial television broadcasting. A terrestrial high-frequency signal supplied via the input connector 26 to the signal distributing section 24 is distributed to the tuner section 22 and the output connector 28. That is, as shown in Fig. 3, the signal distributing section 24 included in the slave tuner 20 has a distributing circuit 24a. A terrestrial high-frequency signal input from the output connector 18 of the master tuner 10 via the input connector 26 of the slave tuner 20 to the signal distributing section 24 is distributed by the distributing circuit 24a to two outputs. One output is the tuner section 22, and the other output is the output connector 28. The input connector 27 and the output connector 29 are connected to the signal distributing section 25 for satellite television broadcasting. A satellite high-frequency signal input via the input connector 27 to the signal distributing section 25 is distributed by a distributing circuit in the signal distributing section 25 to two outputs. One output is the tuner section 23, and the other output is the output connector 29.

As shown in Figs. 1 and 2, the master tuner 10 and the slave tuner 20 are mounted on the wiring board 1 so as to stand substantially in parallel to each other in which the side faces 11b and 21b of the master tuner 10 and the slave tuner 20 face each other. A Moving Picture Experts Group (MPEG) decoder (digital decoder) (not shown) is mounted on the wiring board 1 near the master tuner 10 and the slave tuner 20. Digital signal output terminals (not shown) of the master tuner 10 and the slave tuner 20 are connected via a wiring pattern (not shown) to the MPEG decoder.

As has been described above, in the television broadcast receiving apparatus according to the first embodiment, television broadcast (terrestrial and satellite) high-frequency signals input from an antenna or the like to the input connectors 16 and 17 of the master tuner 10 are distributed by the signal distributing sections 14 and 15 included in the master tuner 10 to two groups of outputs. One group includes the tuner sections 12 and 13 of the master tuner 10, and the other group includes the slave tuner 20 via the output connectors 18 and 19 and the input connectors 26 and 27. Accordingly, when compared with a structure in which a single distributor is connected via connectors to two tuners, the longitudinal dimension of the overall television broadcast receiving apparatus can be reduced, and hence the size of the television broadcast receiving apparatus can be easily reduced. The number of components of the television broadcast receiving apparatus is also reduced. Since a cable for feeding power to the single distributor becomes unnecessary, the number of assembling steps on the wiring board 1 can be reduced, and the television broadcast receiving apparatus thus becomes difficult to be affected by noise.

In the television broadcast receiving apparatus according to the first embodiment, the slave tuner 20 also includes the signal distributing sections 24 and 25. Terrestrial and satellite high-frequency signals input from the output connectors 18 and 19 of the master tuner 10 to the slave tuner 20 are distributed by the signal distributing sections 24 and 25 to two groups of outputs. One group includes the tuner sections 22 and 23, and the other group includes an external device via the output connectors 28 and 29. Accordingly, among terrestrial and satellite high-frequency signals input to the television broadcast receiving apparatus (digital VCR), desired broadcast programs can be recorded simultaneously and independently by the master tuner 10 and the slave tuner 20. Furthermore, terrestrial and satellite high-frequency signals can be supplied to an external television receiver or the like without signal degradation.

This television broadcast receiving apparatus is preferably used for digital broadcasting since the digital signal output terminals of the master tuner 10 and the slave tuner 20 are connected to the MPEG decoder.

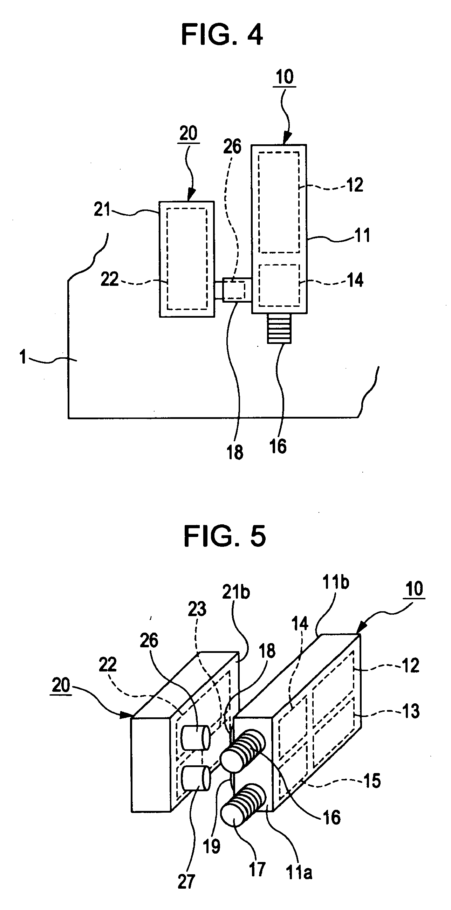

Fig. 4 is a plan view of a television broadcast receiving apparatus according to a second embodiment of the present invention. Fig. 5 is a perspective view of the television broadcast receiving apparatus. In Figs. 4 and 5, portions corresponding to those in Figs. 1 and 2 are given the same reference numerals, and descriptions thereof are omitted to avoid redundancy.

The television broadcast receiving apparatus shown in Figs. 4 and 5 is greatly different from the foregoing first embodiment in that the slave tuner 20 has no signal distributing sections 24 and 25 and no output connectors 28 and 29. That is, in the second embodiment, terrestrial and satellite high-frequency signals input from the output connectors 18 and 19 of the master tuner 10 to the slave tuner 20 are not distributed to an external device. Instead, these high-frequency signals are supplied as they are to the tuner sections 22 and 23. The television broadcast receiving apparatus with this structure is preferably used as, for example, a television receiver with a video function.

## Claims

1. A television broadcast receiving apparatus comprising:
a first tuner (10) having a first metal casing (11) having a rectangular parallelepiped shape, a first input connector (16, 17) serving as a high-frequency input terminal and protruding outward from one end face (11a) in the longitudinal direction of the first metal casing (11), a signal distributing section (14, 15) configured to distribute a high-frequency signal supplied from the first input connector (16, 17) to outputs, a first tuner section (12, 13) being one output, and an output connector (18, 19) being the other output, serving as a high-frequency output terminal, and protruding outward from one side face (11b) extending along the longitudinal direction of the first metal casing (11), the signal distributing section (14, 15) and the first tuner section (12, 13) being stored in an internal space enclosed by the first metal casing (11);
a second tuner (20) having a second metal casing (21) having a rectangular parallelepiped shape, a second input connector (26, 27) protruding outward from one side face (21b) extending along the longitudinal direction of the second metal casing (21) and being inserted in and connected to the output connector (18, 19), and a second tuner section (22, 23) to which the high-frequency signal is supplied via the second input connector (26, 27), the second tuner section (22, 23) being stored in an internal space enclosed by the second metal casing (21); and
a wiring board (1),
wherein the first tuner (10) and the second tuner (20) are mounted on the wiring board (1) so as to stand substantially in parallel to each other in which the one side face (11 b) of the first tuner (10) and the one side face (21 b) of the second tuner (20) face each other.

2. The television broadcast receiving apparatus according to Claim 1, wherein each of the first tuner section (12, 13), the signal distributing section (14, 15), the first input connector (16, 17), the output connector (18, 19), the second tuner section (22, 23), and the second input connector (26, 27) includes two of the same for terrestrial and satellite broadcasting.

3. The television broadcast receiving apparatus according to Claim 1 or 2, wherein the second tuner (20) further includes a second signal distributing section (24, 25) configured to distribute the high-frequency signal supplied from the second input connector (26, 27) to outputs, the second signal distributing section (24, 25) being stored in the internal space enclosed by the second metal casing (21), and a second output connector (28, 29) configured to output the high-frequency signal distributed by the second signal distributing section (24, 25) to an external device, the second output connector (28, 29) protruding outward from one end face (21a) in the longitudinal direction of the second metal casing (21), the second output connector (28, 29) being one output and the second tuner section (22, 23) being the other output.

4. The television broadcast receiving apparatus according to Claim 3, wherein each of the first tuner section (12, 13), the signal distributing section (14, 15), the first input connector (16, 17), the output connector (18, 19), the second tuner section (22, 23), the second signal distributing section (24, 25), the second input connector (26, 27), and the second output connector (28, 29) includes two of the same for terrestrial and satellite broadcasting.

5. The television broadcast receiving apparatus according to any one of Claims 1 to 4, wherein the signal distributing section (14, 15) in the first tuner (10) includes an amplifier (14b).
